(19) Europäisches Patentamt
European Patent Office
Office européen des brevets

(11) **EP 3 547 669 A1**

(12) **EUROPEAN PATENT APPLICATION**

(43) Date of publication:
**02.10.2019 Bulletin 2019/40**

(51) Int Cl.:
**H04N 5/3745** (2011.01)    **H04N 5/378** (2011.01)

(21) Application number: **19165042.3**

(22) Date of filing: **25.03.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2018 US 201815940873**

(71) Applicant: **Analog Devices Global Unlimited Company**
**Hamilton (BM)**

(72) Inventors:
• **DORSTER, Pascal**
 **Norwood**
 **Massachusetts 02062-9106 (US)**
• **BHATIA, Peeyush**
 **Norwood**
 **Massachusetts 02062-9106 (US)**
• **PALMER, Joseph Wayne**
 **Norwood**
 **Massachusetts 02062-9106 (US)**

(74) Representative: **Thompson, Andrew John**
**Withers & Rogers LLP**
**4 More London Riverside**
**London SE1 2AU (GB)**

(54) **ACTIVE PIXEL IMAGE SENSOR USING LOOKUP TABLE FOR REFERENCE VOLTAGE AND / OR SAMPLING INTERVAL PROGRAMMING**

(57) An image sensor can respond to light either linearly or logarithmically in order to achieve flexible and high contrast performance. This is made possible by using a programmable lookup table, or an array of numbers, that represents control parameter values of the image sensor. The control parameter values in the lookup table are programmable and could be kept constant, increase linearly, or non-linearly, between consecutive indexes. Photodiode control circuitry is used to adapt the response of the photodiodes in the image sensor depending on the lighting impacting upon the image sensor.

FIG. 1

**Description**

TECHNICAL FIELD OF THE DISCLOSURE

The present disclosure relates to the field of active-pixel image sensors and more particularly, but not exclusively, it relates to active-pixel image sensors that have an improved sensitivity response to light.

BACKGROUND

An image sensor is a sensor that detects and conveys image information by converting light into electrical signals. While charge-coupled devices (CCDs) have enjoyed popularity for their high quality outputs and high dynamic range, complementary metal-oxide-semiconductor (CMOS) technology has overtaken other image sensor technology in many consumer applications due to their high noise immunity, low static power consumption and low cost.

In a typical CMOS image sensor, there is a two-dimensional (2D) array of pixels, and each pixel includes a photodetector and an active amplifier. Light impacting upon each pixel causes electrical charges to accumulate on the pixels and an accumulated charge is read and transferred to signal processing circuitry. The accumulated charge may then be amplified by individual amplifiers at each pixel before being output as a voltage signal.

CMOS image sensors, and other active-pixel image sensors, are widely used in video analytics applications, for example, in systems that employ machine vision, or in smart cities and smart buildings, which rely on high quality image contrast to improve the reliability in detecting the edges of different objects in a scene.

BRIEF DESCRIPTION OF THE DRAWINGS

To provide a more complete understanding of the present disclosure, features and advantages thereof, reference is made to the following description, taken in conjunction with the accompanying figures, wherein like reference numerals represent like parts, in which:

Figure 1 shows the components of a lookup table and pixel architecture of an active-pixel image sensor in accordance with a first example of the present disclosure;

Figure 2 shows a pixel architecture operation of an active-pixel image sensor in accordance with the first example of the present disclosure;

Figure 3 is a flow chart that shows a method in accordance with the operation of an active-pixel image sensor in accordance with the first example of the present disclosure;

Figure 4 shows a block diagram of a pixel of an active-pixel image sensor in accordance with a second example of the present disclosure;

Figure 5 illustrates operation of a logarithmic code generator of an active-pixel image sensor in accordance with the second example of the present disclosure;

Figure 6 shows the frame acquisition sequence of an active-pixel image sensor in accordance with the second example of the present disclosure; and

Figure 7 is a graph of a transfer function showing how illuminance affects the photocurrent of a pixel of an active-pixel image sensor in accordance with the second example of the present disclosure.

DETAILED DESCRIPTION

In an ideal imaging system used for scene analytics, the image contrast would be independent to changes in the ambient lighting or room lighting striking the image scene. In this case, the reliability of the edge detection would not be affected when the room lights or city lights are switched on and off or when passing objects casts a moving shadow on objects, for example. However, current imaging systems cannot achieve this. Therefore, there is a need for improvements in active-pixel image sensors.

There is provided an image sensor that can respond to light either linearly or logarithmically in order to achieve flexible and high contrast performance. This is made possible by using a programmable lookup table, or an array of numbers, that represents control parameter values of the image sensor. The control parameter values in the lookup table could be programmed to be kept constant, increase linearly, or non-linearly, between consecutive indexes. Photodiode control circuitry is used to adapt the response of the photodiodes in the image sensor depending on the lighting impacting upon the image sensor.

According to a first aspect of the disclosure, there is provided an active-pixel image sensor, comprising: a lookup table (LUT), having a plurality of index positions and having stored therein a plurality of control parameter values; a plurality of photodiodes; and photodiode control circuitry arranged to adapt the response of the plurality of photodiodes to light in dependence on the control parameter values stored in the LUT, wherein the plurality of control parameter values are programmable (e.g., a change in control parameter values between consecutive index positions of the LUT is programmable/configurable), and wherein the plurality of control parameter values can define a sensitivity response function of the active-pixel image sensor to light.

The active-pixel image sensor, which may be a CMOS sensor, may preferably comprise an array of pixels, each pixel comprising a photodiode and an amplifier.

By using a LUT to configure an active-image image sensor with a pattern of control parameter values, , the image sensor can be made to respond to light either linearly or logarithmically and thus achieve high contrast performance. Preferably, the pattern of control parameter values may be programmed, e.g., based on one or more light conditions, so that the at least some of the plurality of control parameter values stored in the index positions of the LUT changes non-decreasingly between each consecutive index positions of the LUT. The pattern of control parameter values may be programmed so that the at least some of the plurality of control parameter values stored in some or each of the index positions of the LUT is kept substantially constant. The pattern of control parameter values may be programmed so that the at least some of the plurality of control parameter values stored in the index positions of the LUT increases linearly between some or each consecutive index positions of the LUT. The pattern of control parameter values may be programmed so that the at least some of the plurality of control parameter values stored in the index positions of the LUT increases non-linearly, preferably logarithmically, between some or each consecutive index positions of the LUT.

The LUT offers a high degree of flexibility for how the active-pixel image sensor of the present disclosure respond to light so that they are capable of providing high quality images independent to changes in the ambient lighting or room lighting. In particular, an active-pixel image sensor of the present disclosure can be programmed to respond to light in a logarithmic way as well as linearly means that changes in illuminance do not affect the image contrast ratio as much as in a traditional image sensor that only offers a linear response.

The plurality of control parameter values can define a sensitivity response function of the active-pixel image sensor to light. This provides the advantage of allowing the active-pixel image sensor to be optimized for various lighting conditions in a flexible manner.

For example, an optimized sensitivity response function for an active-pixel image sensor for use in a dark room may be programmed to respond linearly. In another example, an optimized sensitivity response function for an active-pixel image sensor for use in a bright setting such as a city nightscape might be more susceptible to saturation and so it may be programmed to respond logarithmically. In yet another example, an optimized sensitivity response function for an active-pixel image sensor for use in a setting that is sometimes dark and sometimes bright may be programmed to switch between linear and logarithmic responses depending on the current conditions.

In any case, the sensitivity response function may be further optimized for reducing pixel noise without compromising the high contrast performance of the active-pixel image sensor.

Various control parameter values may affect the response of the active-pixel image sensor.

The plurality of control parameter values may comprise a voltage reference value stored in each of a plurality of voltage reference fields, each of the plurality of voltage reference fields corresponding to an index position of the LUT.

In some examples, the voltage reference value stored in each of the plurality of voltage reference fields may be substantially constant.

In other examples, the voltage reference value stored in each of the plurality of voltage reference fields may change linearly or non-linearly, preferably logarithmically, between consecutive index positions of the LUT.

Additionally or alternatively to the plurality of control parameter values comprising a voltage reference value stored in each of a plurality of voltage reference fields, the plurality of control parameter values may comprise a number of clock cycles stored in each of a plurality of clock input fields, each of the plurality of clock input fields corresponding to an index position of the LUT.

As with the voltage reference values, in some examples, the number of clock cycles stored in each of the plurality of clock input fields may be substantially constant.

As with the voltage reference values, in other examples, the number of clock cycles stored in each of the plurality of clock input fields may change linearly or non-linearly, preferably logarithmically, between consecutive index positions of the LUT.

If the plurality of control parameter values comprises both voltage reference values and number of clock cycles stored in each of a respective plurality of voltage reference and clock input fields, each of the plurality of voltage reference and clock input fields corresponding to an index position of the LUT, then the combination of the voltage reference values and the number of clock cycles may affect the sensitivity response function of the active-pixel image sensor.

In the case where both the reference voltage and the clock input field are kept constant between consecutive index positions of the LUT, the resulting output sensitivity response of the active-pixel image sensor may be linear.

In the case where one of the reference voltage and the clock input field is kept constant, but the other one of reference voltage and the clock input field increases either linearly or non-linearly, preferably logarithmically, between consecutive index positions of the LUT, the resulting output sensitivity response of the active-pixel image sensor may be non-linear, preferably logarithmically.

Preferably, the photodiode control circuitry comprises a plurality of comparators, each comparator being configured to receive an output of a photodiode of the plurality of photodiodes and a control parameter value from an index position of the LUT at its input. Thus, the voltage at a pixel after charge has accumulated may be compared with a reference voltage so as to determine whether the current LUT index will be stored in the pixel memory or not. The reference voltage may be derived from the LUT as described above.

Preferably, the photodiode control circuitry comprises a plurality of integrating capacitors, each integrating capacitor being coupled to a photodiode of the plurality of photodiodes.

Preferably, the photodiode control circuitry comprises a memory for storing an index position of the LUT.

According to a second aspect of the disclosure, there is provided a method of controlling an active-pixel image sensor, comprising: defining a sensitivity response function of the active-pixel image sensor to light; storing of a plurality of control parameter values in a LUT wherein at least some of the plurality of control parameter values are programmable (e.g., a change in control parameter values between consecutive index positions of the LUT is programmable/configurable, and can be based on the sensitivity response function); obtaining a control parameter value stored at an index position in the LUT; obtaining an output of each photodiode of a plurality of photodiodes; adapting the response of the plurality of photodiodes to light using photodiode control circuitry controlled by or in dependence on the control parameter values stored in the LUT.

By storing, in the LUT of the active-image image sensor, a pattern of control parameter values, the image sensor can be made to respond to light either linearly or logarithmically and thus achieve high contrast performance. Preferably, the method comprises storing the pattern of control parameter values so that the at least some of the plurality of control parameter values changes non-decreasingly between each consecutive index positions of the LUT. The method may comprise storing the pattern of control parameter values so that the at least some of the plurality of control parameter values in some or each of the index positions of the LUT is kept substantially constant. The method may comprise storing the pattern of control parameter values so that the at least some of the plurality of control parameter values increases linearly between some or each consecutive index position of the LUT. The method may comprise storing the pattern of control parameter values so that the at least some of the plurality of control parameter values increases non-linearly, preferably logarithmically, between some or each consecutive index positions of the LUT.

The LUT offers a high degree of flexibility for how the active-pixel image sensor of the present disclosure respond to light so that they are capable of providing high quality images independent to changes in the ambient lighting or room lighting. In particular, an active-pixel image sensor of the present disclosure can be programmed to respond to light in a logarithmic way as well as linearly means that changes in illuminance do not affect the image contrast ratio as much as in a traditional image sensor that only offers a linear response.

The method further comprises defining a sensitivity response function of the active-pixel image sensor to light. This provides the advantage of allowing the active-pixel image sensor to be optimized for various lighting conditions in a flexible manner.

In one example, an optimized sensitivity response function for an active-pixel image sensor for use in a dark room may be defined so that the response is linear. In another example, an optimized sensitivity response function for an active-pixel image sensor for use in a bright setting such as a city nightscape might be more susceptible to saturation and so it may be defined so that the response is logarithmic. In yet another example, an optimized sensitivity response function for an active-pixel image sensor for use in a setting that is sometimes dark and sometimes bright may be defined to switch between linear and logarithmic responses depending on the current conditions.

The method may further comprise storing a voltage reference value in a plurality of voltage reference fields at each index position of the LUT.

In some examples, the method may further comprise storing a substantially constant voltage reference value in a plurality of voltage reference fields at each index position of the LUT.

In other examples, the method may further comprise storing a voltage reference value in each of a plurality of voltage reference fields that changes linearly or non-linearly, preferably logarithmically, between consecutive index positions of the LUT.

Additionally or alternatively to the method further comprising storing a voltage reference value in a plurality of voltage reference fields at each index position of the LUT, the method may further comprise storing a number of clock cycles in a plurality of clock input fields at each index position of the LUT.

As with the voltage references values, the method may further comprise storing a substantially constant number of clock cycles in a plurality of clock input fields at each index position of the LUT.

As with the voltage reference values, the method may further comprise storing a number of clock cycles in each of a plurality of clock input fields that changes linearly or non-linearly, preferably logarithmically, between consecutive index positions of the LUT.

In certain preferable examples, the method may further comprise one or more of the following: setting a first index position of the LUT to n=0; initiating a clock cycle count at a clock counter; receiving a clock signal from the clock counter at the photodiode control circuitry; and incrementing the index position of the LUT when the clock cycle count reaches a predetermined number, wherein preferably the predetermined number is stored in a clock input field of the LUT.

According to a third aspect of the disclosure, there is provided photodiode control circuitry, comprising: a photodiode; an integrating capacitor coupled to the photodiode; a comparator; and a memory, wherein the photodiode circuitry is arranged to adapt the response of the photodiode circuitry to light in dependence on a plurality of control parameter values stored in a LUT and wherein the plurality of control parameter values are programmable (e.g., a change in control parameter values between consecutive index positions of the LUT is programmable/configurable), and wherein the plurality of control parameter values define a sensitivity response function of the photodiode circuitry to light.

Advantages relating to use of a LUT in accordance with the first aspect of the disclosure or the second aspect of the disclosure, or any other feature of the first and second aspects, may also equally apply to the third aspect of the disclosure.

It has been recognized that a greater degree of flexibility is desired in how active-pixel image sensors respond to light so that they are capable of providing high quality images independent to changes in the ambient lighting or room lighting. In particular, it has been recognized that utilizing image sensors that can respond to light in a logarithmic way as well as linearly means that changes in illuminance do not affect the image contrast ratio as much as in a traditional linear image sensor.

With a traditional linear image sensor, the image contrast of the scene will change whenever the illuminance changes. The equation below describes the image contrast calculation applied on an image taken with a standard linear image sensor. As shown below, if the illumination intensity (I) changes, the contrast value will also change.

$$Linear\ Image\ Contrast_{AB} = PixelA(\propto_A I) - PixelB(\propto_B I) = I\left(PixelA(\propto_A) - PixelB(\propto_B)\right)$$

For comparison with the linear image contrast calculation above, the equation below describes the image contrast calculation applied on an image taken with an image sensor responding to light logarithmically. Here, it is shown that the illuminance intensity (I) is cancelled out of the contrast ratio due to the nature of logarithm data and operations. Using an image sensor that responds to the illumination logarithmically in order to keep the image contrast invariant to illumination changes is a significant advantage in imaging analytics requiring high performance contrast.

$$Logarithmic\ Image\ Contrast_{AB} = PixelA(\propto_A I) - PixelB(\propto_B I) = Log\frac{(\propto_A I)}{(\propto_B I)} = Log\frac{(\propto_A)}{(\propto_B)}$$

In the present disclosure, a lookup table is used to configure an active-image image sensor with a pattern of control parameter values to make the image sensor respond to light either linearly or logarithmically in order to advantageously achieve high contrast performance.

The following detailed description and figures provide examples of how the present disclosure can be implemented and should not be seen as limiting examples, rather illustrations of how the various features of the active-pixel image sensor, the method of controlling the active-pixel image sensor, and the photodiode control circuitry disclosed herein can be combined, although other optional combinations will be evident upon reading the following description in light of the figures.

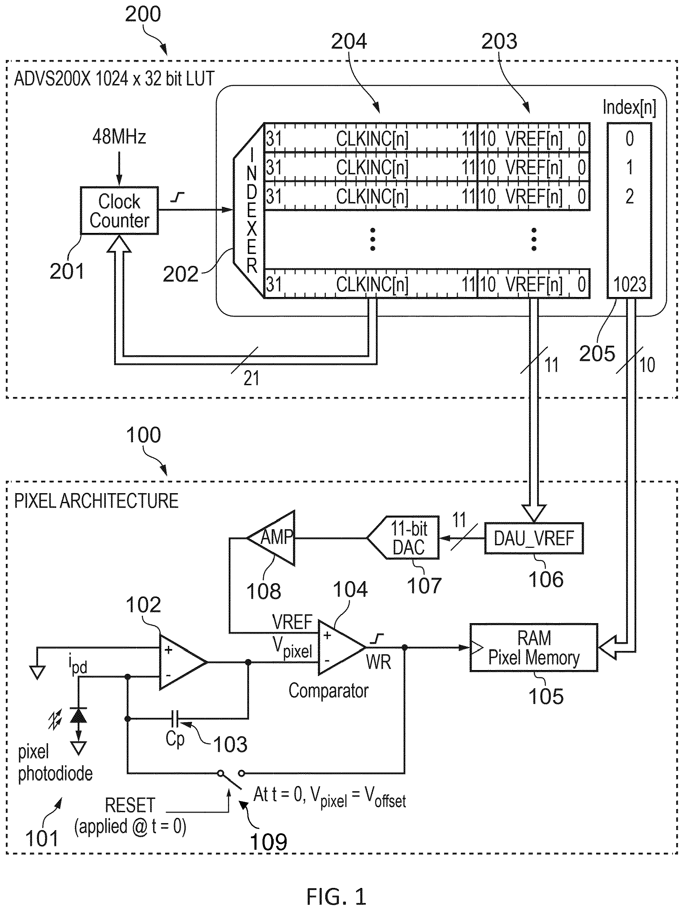

Figure 1 shows the components of a 1024 x 32 bit LUT and the pixel architecture of an active-pixel image sensor in accordance with a first example of the present disclosure.

In the pixel architecture 100, a photodiode 101 of a pixel receives light and creates a photocurrent $I_{pd}$ that is received by the negative input of an op-amp 102. An integrating capacitor 103 lies between the negative input of the op-amp 102 and its output. The output of the op-amp 102 is received by the negative input of a comparator 104 and represents the pixel voltage. The positive input of the comparator 104 receives VREF, which is derived from LUT 200. A reset circuit (switch) 109 lies between the negative input of the op-amp 102 and the output of the comparator 104, the reset circuit (switch) 109 being used to reset the voltage Vpixel at time T = 0 to an offset voltage of the offset.

In the LUT 200, a clock input from a Clock Counter 201 is fed into index 202, which comprises a column of VREF data 203 and a column of CLKINC data 204. The column of CLKINC data 204 is fed back to Clock Counter 201 in a feedback loop whereas the column of VREF data 203 is fed into the pixel architecture 100 via a data acquisition unit 106, an 11-bit digital-to-analog convertor 107 and amplifier 108 before being input into the positive input of the comparator 104. Each row of VREF and CLKINC data of columns 203 and 204 correspond with an index position as shown at index 205. The index is linked to a dedicated random access memory, pixel memory, 105, which stores the current index position if Vpixel is greater than VREF at the end of a predetermined clock cycle.

The clock cycle is determined by the column of CLKINC data 204. When the end of a clock cycle is reached, the index position in the index 205 of the LUT 200 is incremented to a next position. The process repeats until the index 205 has reached its final index position.

The column of VREF data 203 and/or the column of CLKINC data 204 may be configured with a pattern that allows the LUT 200 to create an output via the photodiode control circuitry, pixel architecture, 100 to adapt the response of each photodiode 101 within a pixel array to light in dependence on the control parameter values, VREF and CLKINC, stored in the LUT 200. In particular, at least some of these control parameter values may be programmed to be kept constant, increased linearly or increased non-linearly, preferably logarithmically, between consecutive index positions of the LUT 200. The result is that the response of the plurality of photodiodes within the pixel array to light can be programmed to be linear or logarithmic in accordance with the particular values of the index of 202. Accordingly, the active-pixel image sensor is not confined to one response, rather, it can have different responses depending on the need in a particular lighting setting.

The integration control of the active-pixel image sensor is a full digital solution implemented on-chip that is configured by the system controller firmware. It relies on a programmable time-interval clock counter and a 1024 x 32 bit LUT.

Each (32-bit) word of the LUT is composed of an 11-bit VREF field and a 21-bit CLKINC field. The VREF field is used to set the VREF voltage of the pixel comparator. The CLKINC field is used to define the number of clock cycle that will lapse until the next index (word) of the LUT is accessed. For example, if CLKINC were set to 100, the integration control would wait one hundred 48MHz clock cycles (100 x 20.83ns) before it indexes to the next LUT position.

The pixel architecture or pixel circuitry of the active-pixel image sensor is based on a mixed analog/digital architecture. This architecture, illustrated in Figure 1, is replicated in all the pixels (320x240) of the active-pixel image sensor. It comprises a photodiode coupled to an integrating capacitor, a voltage comparator and a single word memory of 10-bits (the RAM Pixel Memory block shown in Figure 1).

At the start of an image frame exposure, the LUT is set to index = 0, the integration capacitor (Cp) charge is reset and a VREF voltage set by the 11-bit VREF field is applied to the pixel comparator. The LUT will remain at index 0 until the number of clock cycles in the CLKINC field is reached. During this time, if the integration capacitor voltage Vpixel reaches the VREF level, the current LUT index will be stored into the pixel memory (the LUT index is 10-bits). Once the number of clock cycles in the CLKINC word has been reached, the integration control will automatically increment the LUT index (by one index). This method is then repeated to pass through all the LUT indexes (0 - 1023). After the index 1023 has been reached, the integration will release operation to the active-pixel image sensor system controller that will read back the entire pixel array memory for that image frame.

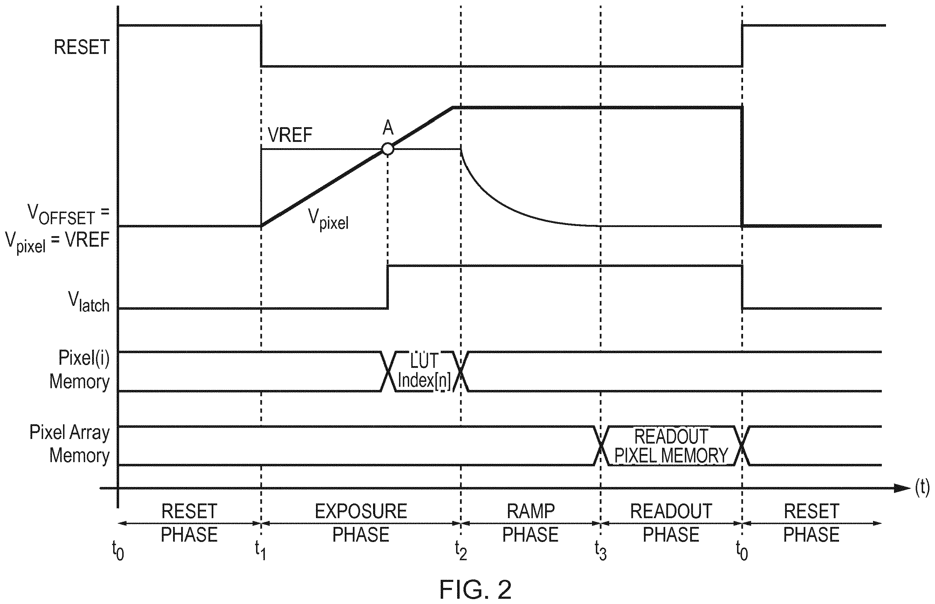

Figure 2 provides a graphic real-time description of a method according to an example of the present disclosure.

The integration control operations (integration period) is fully deterministic and is equal to the sum of all the CLKINC field of the LUT times the active-pixel image sensor clock period. The shortest possible integration period will therefore be 1024 * 20 * 20.83 ns or 21.33 $\mu$s, while the longest integration window will be 1023 * 221 * 20.83 ns or 44.74 s. Practical and preferable values for the integration window will however be in the span of 10ms to 500ms.

Controlling the active-pixel image sensor response to light can be done either by controlling the 11-bit VREF values or the CLKINC values. For example, VREF can be kept constant, it can be incremented linearly or it can be incremented non-linearly such as with a logarithmic pattern. On the other hand, the CLKINC values will impact the time given to the integration capacitor to build up a potential. Therefore, similarly to VREF, CLKINC can be kept constant, it can be incremented linearly or it can be incremented non-linearly such as with a logarithmic pattern.

As a result, the LUT of the active-pixel image sensor in accordance with the first example of the present disclosure, during the exposure phase, can be configured to operate as a standard linear active-pixel image sensor, or a non-standard active-pixel image sensor such as a logarithmic active-pixel image sensor, or as a combination of the two. Thus, a highly flexible active-pixel image sensor response to light is achieved.

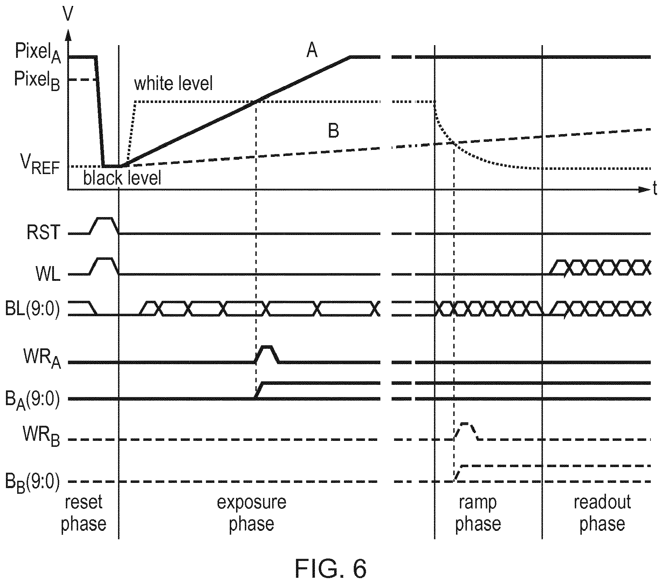

In the example of Figure 2, it can be seen that between $t = t_0$ and $t = t_1$, VREF and $V_{pixel}$ are reset to an offset voltage, $V_{OFFSET}$. Then, a value for VREF is determined from the value stored in the LUT and at time $t = t_1$, $V_{pixel}$ of pixel A starts being compared to VREF. As exposure time increases, $V_{pixel}$ eventually reaches VREF and at this point, the LUT index position is stored in the pixel memory. If $V_{pixel}$ never reaches VREF, the LUT index position is not stored in the pixel memory. The exposure phase ends at $t = t_2$. The ramp phase between $t = t_2$ and $t = t_3$ will be explained below with reference to Figure 6. Between $t = t_3$ and $t = t_0$, the pixel memory is read out and then the reset phase begins again for the next index position of the LUT.

Between consecutive LUT index positions, the value of VREF in the first example of the present disclosure will increase logarithmically (but the value of CLKINC is kept constant). Thus, for a higher value of VREF at the index position immediately subsequent to that shown in Figure 2, $V_{pixel}$ may still reach VREF during the exposure phase. However, for an even higher value of VREF for an even higher index position, $V_{pixel}$ may not reach VREF during the exposure phase.

In a particularly preferred operation of the active-pixel image sensor, the highly illuminated pixels are addressed using the CLKINC values with the highest VREF (this approach is called time-to-Vref), while the pixels lying in the darker areas are addressed by ramping the VREF value down (see RAMP PHASE in Figure 2) to the lowest VREF levels. This is advantageous because in most practical applications, it is not possible to wait multiple seconds for these darker pixels to build up as much voltage as the maximum VREF.

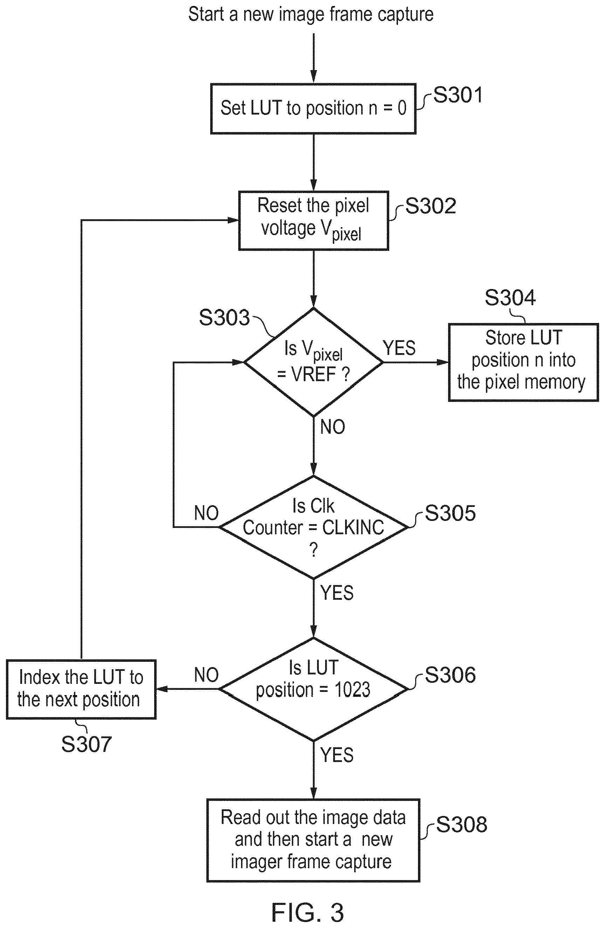

Figure 3 provides a flow chart describing a method according to an example of the present disclosure.

At the start of a new imager frame capture, at step S301, the LUT is set to index position n = 0. At step S302, the pixel voltage Vpixel is reset. The pixel voltage Vpixel may be reset an offset voltage re-offset (or in other examples, to V = 0). At step S303, Vpixel is compared with VREF obtained from the LUT. If Vpixel at least as high as VREF, the current index position n is stored into Vpixel memory at step S304. If Vpixel is less than VREF, and if, at step S305, the clock counter has not yet reached the CLKINC value obtained from the LUT, then Vpixel is compared with VREF again. If, at step S305, the clock counter has reached the CLKINC value obtained from the LUT, the current index position of the LUT is not stored into the pixel memory. At step S306, if the index position of the LUT has not yet reached its final position, in this case n = 1023, then the index position of the LUT is incremented to the next position at step S307 and steps S302 to S306 are repeated. If, at step S306, the index position of the lookup table is at its final position, in this case n = 1023, then the image data is read out at step S308 and a new imager frame capture is started.

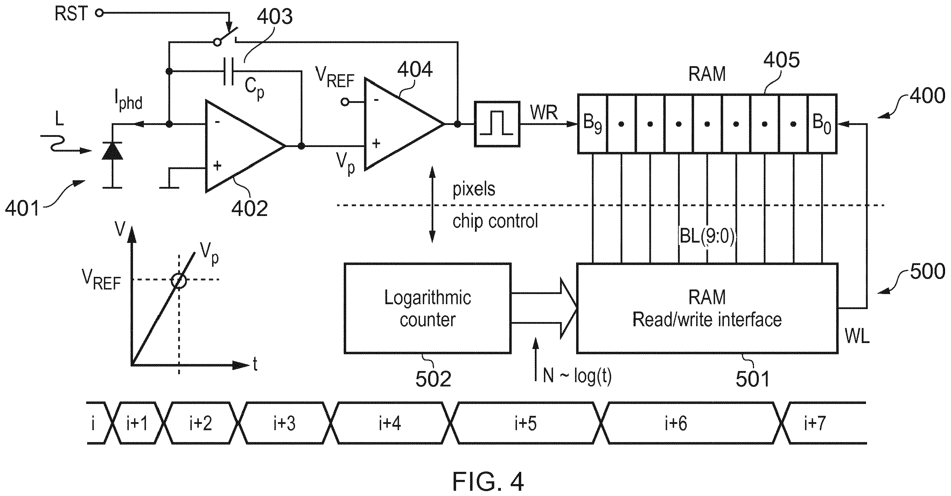

Now turning to Figure 4, a block diagram of a pixel of an active-pixel image sensor comprising a matrix of 320 x 240 pixels in accordance with a second example of the present disclosure is shown.

In the pixel of Figure 4, a photodiode 401 receives light and creates a photo current $I_{phd}$ that is received by the negative input of an op-amp 402. An integrating capacitor 403 lies between the negative input of the op-amp 402 and its output. The output of the op-amp 402 is received by the negative input of a comparator 404 and represents the pixel voltage. The positive input of the comparator 404 receives VREF, which is derived from dedicated RAM 405 which contains the LUT. A reset circuit RST lies between the negative input of the op-amp 402 and the output of the comparator 404, the reset switch RST being used to reset the voltage Vpixel at time t = 0 to an offset voltage of the offset.

The function of the active-pixel image sensor is to acquire and digitize images at the pixel level. The result of the A/D conversion in the example of Figure 4, stored in the pixel, is proportional to the logarithm of the photocurrent.

Each pixel comprises a photodiode, an integrator to integrate the current delivered by the photodiode, a comparator for comparing the output of the integrator with a voltage reference and a memory word of 10 bits in which the code is sampled via a 10-bit data bus when the comparator switches.

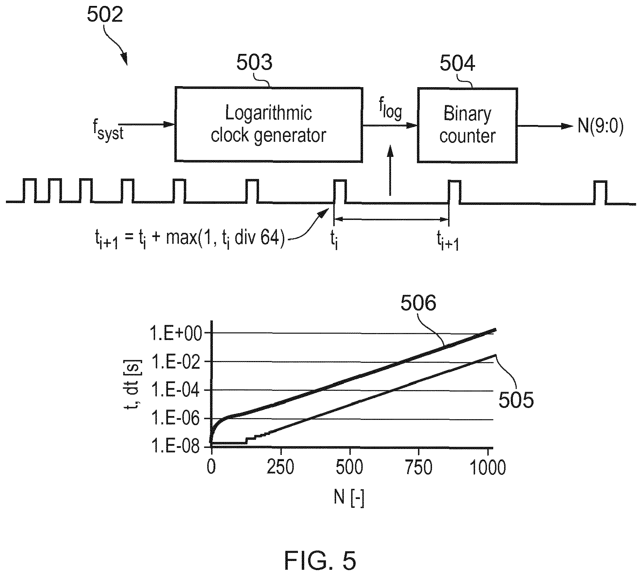

The optical front-end of the active-pixel image sensor incorporates a high dynamic range pixel array with logarithmic compression in the digital domain to avoid the large fixed pattern noise associated with analog compression. Figure 4 shows a block diagram of a pixel and the logarithmic time generator. Each pixel integrates the photocurrent delivered by a photodiode on a capacitor. The resulting voltage ($V_P$) is continuously compared to a reference voltage ($V_{REF}$). $V_{REF}$ is determined by values stored in a LUT at a dedicated RAM. In this example, as the index number is incremented in the LUT, the value of $V_{REF}$ remains constant. Another set of values stored in the LUT is the clock input field. In this example, as the index number is incremented in the LUT, the value of the clock input field increases logarithmically, the logarithmic code being generated as shown by Figure 5 and explained below.

Turning back to Figure 4, once $V_{REF}$ is reached, the content of a 10-bit digital word ($BL_{9:0}$) distributed to all pixels in parallel is stored in the pixel memory ($B_{9:0}$). This digital word evolves over time to represent the logarithm of the time elapsed since the beginning of the integration as the index position of the LUT is incremented. Once photocurrent integration is terminated, the 10-bit words stored in the pixel array are read out.

The logarithmic code is generated by a state machine in the logarithmic counter 502, the principles of which are illustrated in Figure 5.

A first counter, the logarithmic clock generator 503, clocked by the system clock generates pulses at exponentially increasing intervals to clock a second counter, the binary counter 504. The output of the second counter is therefore proportional to the logarithm of the integration time. At a given time t, the interval to the next pulse, with the default parameters, is equal to 1.56 % or 1/64 of t. The interval between two successive pulses must be a multiple of the clock period. When the counter starts to count, it is not possible to add 1.56 % of one clock period. Therefore, initially, the interval between two pulses is equal to one clock period, and then it progressively becomes proportional to the integration time, as illustrated by the curve 505 in Figure 5. The resulting relationship between the output code of the counter and the integration time is shown by the curve 506. Initially there is a linear relationship between the counter output and the integration time. Then, within a few microseconds, the relationship between the output code and the integration time becomes logarithmic.

A typical frame acquisition sequence is illustrated in Figure 6 for two pixels, A and B.

In a first phase, the integrator of each pixel is reset at the black level by applying the desired black level ($V_{INIT}$) on signal $V_{REF}$. Simultaneously, the internal 10-bit memory of each pixel is also reset.

During the exposure phase, $V_{REF}$ is set to a desired white level ($V_{EXP}$) and photocurrents are integrated on $C_P$. Simultaneously, a code proportional to the logarithm of the time elapsed since the beginning of the exposure phase is applied on $BL_{9:0}$. In the example shown in Figure 6, pixel A reaches the white level before the end of the exposure phase and stores in its internal memory the state of $BL_{9:0}$. The photocurrent of pixel B is too low to reach the white level before the end of the exposure phase, so that its memory does not hold a valid data at the end of this phase.

In order to convert the voltage of pixel B, the exposure phase is followed by a ramp phase, where signal $V_{REF}$

is decreased exponentially down to 10% of the white level, then linearly down to the black level ($V_{STOP}$). With this scheme, exponential encoding of data is performed over one more decade than what would have been achieved with a fixed $V_{REF}$.

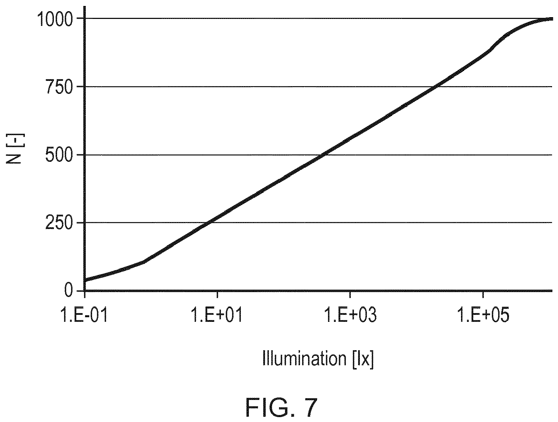

A typical transfer function between the photocurrent of a pixel and the corresponding code stored in its internal memory is illustrated in Figure 7. The photocurrent is proportional to the logarithm of the integration time, except at very low illumination when the signal magnitude is below 10% of the white level, and at very high illumination when the counter is not yet logarithmic.

The above description relates to particularly preferred aspects of the disclosure, but it will be appreciated that other implementations are possible. Variations and modifications will be apparent to the skilled person, such as equivalent and other features which are already known and which may be used instead of, or in addition to, features described herein. Features that are described in the context of separate aspects or examples may be provided in combination in a single aspect or example. Conversely, features which are described in the context of a single aspect or example may also be provided separately or in any suitable subcombination.

One skilled in the art would appreciate that the present disclosure describes an apparatus comprising means for implementing/carrying out any one of the methods described herein.

It is also imperative to note that all of the specifications, dimensions, and relationships outlined herein (e.g., the number of processors, logic operations, etc.) have only been offered for purposes of example and teaching only. Such information may be varied considerably without departing from the spirit of the present disclosure, or the scope of the appended claims or examples described herein. The specifications apply only to one non-limiting example and, accordingly, they should be construed as such. In the foregoing description, example embodiments have been described with reference to particular processor and/or component arrangements. Various modifications and changes may be made to such embodiments without departing from the scope of the appended claims or examples described herein. The description and drawings are, accordingly, to be regarded in an illustrative rather than in a restrictive sense.

Note that with the numerous examples provided herein, interaction may be described in terms of two, three, four, or more electrical components or parts. However, this has been done for purposes of clarity and example only. It should be appreciated that the system can be consolidated in any suitable manner. Along similar design alternatives, any of the illustrated components, modules, blocks, and elements of the FIGURES may be combined in various possible configurations, all of which are clearly within the broad scope of this Specification. In certain cases, it may be easier to describe one or more of the functionalities of a given set of flows by only referencing a limited number of electrical elements. It should be appreciated that the electrical circuits of the FIGURES and its teachings are readily scalable and can accommodate a large number of components, as well as more complicated/sophisticated arrangements and configurations. Accordingly, the examples provided should not limit the scope or inhibit the broad teachings of the electrical circuits as potentially applied to a myriad of other architectures.

Note that in this Specification, references to various features (e.g., elements, structures, modules, components, steps, operations, characteristics, etc.) included in "one embodiment", "example embodiment", "an embodiment", "another embodiment", "some embodiments", "various embodiments", "other embodiments", "alternative embodiment", and the like are intended to mean that any such features are included in one or more embodiments of the present disclosure, but may or may not necessarily be combined in the same embodiments. It is also important to note that the functions described herein illustrate only some of the possible functions that may be executed by, or within, systems/circuits illustrated in the FIGURES. Some of these operations may be deleted or removed where appropriate, or these operations may be modified or changed considerably without departing from the scope of the present disclosure. In addition, the timing of these operations may be altered considerably. The preceding operational flows have been offered for purposes of example and discussion. Substantial flexibility is provided by embodiments described herein in that any suitable arrangements, chronologies, configurations, and timing mechanisms may be provided without departing from the teachings of the present disclosure. Numerous other changes, substitutions, variations, alterations, and modifications may be ascertained to one skilled in the art and it is intended that the present disclosure encompass all such changes, substitutions, variations, alterations, and modifications as falling within the scope of the appended claims or examples described herein. Note that all optional features of the apparatus described above may also be implemented with respect to the method or process described herein and specifics in the examples may be used anywhere in one or more embodiments.

**Claims**

1. An active-pixel image sensor, comprising:

   a lookup table (LUT) having a plurality of index positions and having stored therein a plurality of control parameter values;

a plurality of photodiodes; and
photodiode control circuitry arranged to adapt a response of the plurality of photodiodes to light in dependence on the control parameter values stored in the LUT,
wherein the plurality of control parameter values are programmable and define a sensitivity response function of the active-pixel image sensor to light.

2. An active-pixel image sensor according to claim 1, wherein the plurality of control parameter values comprises a number of clock cycles stored in each of a plurality of clock input fields, each of the plurality of clock input fields corresponding to an index position of the LUT.

3. An active-pixel image sensor according to claims 1 or 2, wherein the plurality of control parameter values comprises a voltage reference value stored in each of a plurality of voltage reference fields, each of the plurality of voltage reference fields corresponding to an index position of the LUT.

4. An active-pixel image sensor according to any preceding claim, wherein the at least some of the plurality of control parameter values stored in the index positions of the LUT:

   are kept substantially constant between consecutive index positions of the LUT;
   increase linearly between consecutive index positions of the LUT;
   increase non-linearly between consecutive index positions of the LUT;
   increase logarithmically between consecutive index positions of the LUT; or
   change non-decreasingly between consecutive index positions of the LUT.

5. An active-pixel image sensor according to any preceding claim, wherein the photodiode control circuitry comprises a plurality of comparators, each comparator being configured to receive an output of a photodiode of the plurality of photodiodes and a control parameter value from an index position of the LUT.

6. An active-pixel image sensor according to any preceding claim, wherein the photodiode control circuitry comprises a plurality of integrating capacitors, each integrating capacitor being coupled to a photodiode of the plurality of photodiodes.

7. An active-pixel image sensor according to any preceding claim, wherein the photodiode control circuitry comprises a memory for storing an index position of the LUT.

8. An active-pixel image sensor according to any preceding claim, wherein the active-pixel image sensor is a CMOS sensor.

9. A method of controlling an active-pixel image sensor, comprising:

   defining a sensitivity response function of the active-pixel image sensor to light;
   storing of a plurality of control parameter values in a lookup table (LUT) based on the sensitivity response function;
   obtaining a control parameter value stored at an index position in the LUT;
   obtaining an output of each photodiode of a plurality of photodiodes; and
   adapting a response of the plurality of photodiodes to light using photodiode control circuitry controlled by the control parameter values stored in the LUT.

10. A method according to claim 9, wherein the method further comprises:
    storing a number of clock cycles in a plurality of clock input fields at each index position of the LUT.

11. A method according to claims 9 or 10, wherein the method further comprises:
    storing a voltage reference value in a plurality of voltage reference fields at each index position of the LUT.

12. A method according to any of claims 9 to 11, wherein the method further comprises:
    storing a substantially constant control parameter value in the index positions of the LUT.

13. A method according to any of claims 9 to 12, wherein the method further comprises:
    storing the plurality of control parameter values to: a) change non-decreasingly between consecutive index positions of the LUT; or b) increase logarithmically between consecutive index positions of the LUT.

14. A method according to any of claims 9 to 13, wherein the method further comprises:

setting a first index position of the LUT to n=0;
initiating a clock cycle count at a clock counter;
receiving a clock signal from the clock counter at the photodiode control circuitry; and
incrementing the index position of the LUT when the clock cycle count reaches a predetermined number, wherein the predetermined number is stored in a clock input field of the LUT.

15. Photodiode circuitry, comprising:

a photodiode;
an integrating capacitor coupled to the photodiode;
a comparator; and
a memory,
wherein the photodiode circuitry is arranged to adapt a response of the photodiode circuitry to light in dependence on a plurality of control parameter values stored in a lookup table (LUT), and the plurality of control parameter values are programmable to define a sensitivity response function of the photodiode circuitry to light.

FIG. 1

FIG. 2

Start a new image frame capture

Set LUT to position n = 0 — S301

Reset the pixel voltage $V_{pixel}$ — S302

S303 — Is $V_{pixel}$ = VREF ? 

YES → Store LUT position n into the pixel memory — S304

NO

Is Clk Counter = CLKINC ? — S305

NO

YES

Index the LUT to the next position — S307

NO ← Is LUT position = 1023 — S306

YES

Read out the image data and then start a new imager frame capture — S308

FIG. 3

FIG. 4

502

503

Logarithmic clock generator

$f_{syst}$

$f_{log}$

504

Binary counter

$N(9{:}0)$

$t_{i+1} = t_i + \max(1, t_i \text{ div } 64)$

$t_i$

$t_{i+1}$

506

505

1.E+00
1.E-02
1.E-04
1.E-06
1.E-08

t, dt [s]

0        250       500       750      1000

N [-]

FIG. 5

FIG. 6

FIG. 7

Europäisches
Patentamt
European
Patent Office
Office européen
des brevets

## EUROPEAN SEARCH REPORT

Application Number

EP 19 16 5042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/076432 A1 (LUO QIANG [US] ET AL) 24 April 2003 (2003-04-24) * the whole document * | 1-5,7-14 | INV. H04N5/3745 H04N5/378 |
| X | US 5 920 274 A (GOWDA SUDHIR MUNISWAMY [US] ET AL) 6 July 1999 (1999-07-06) * the whole document * | 1,3-5,8, 9,11,13 | |
| X | US 2007/102643 A1 (LIU JAMES Z [US] ET AL) 10 May 2007 (2007-05-10) * the whole document * | 1,3-5,9, 11,13 | |
| X | US 2014/313387 A1 (VOGELSANG THOMAS [US] ET AL) 23 October 2014 (2014-10-23) | 1,2,4,5, 8-10,13, 14 | |
| Y | * figures 2,3,19-26 * * paragraphs [0048] - [0060] * * paragraphs [0110] - [0133] * | 3,11 | |
| X | US 2011/007199 A1 (HEIM PASCAL [CH] ET AL) 13 January 2011 (2011-01-13)  * the whole document * | 1,2,4,5, 9,10,14, 15 | TECHNICAL FIELDS SEARCHED (IPC) H04N |
| X | US 2003/107666 A1 (HARTON AUSTIN [US] ET AL) 12 June 2003 (2003-06-12) | 1,4-9,13 | |
| Y | * the whole document * | 3,11 | |

The present search report has been drawn up for all claims

| Place of search | Date of completion of the search | Examiner |
|---|---|---|
| Munich | 11 June 2019 | Moorhouse, David |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 547 669 A1**

## ANNEX TO THE EUROPEAN SEARCH REPORT
## ON EUROPEAN PATENT APPLICATION NO.

EP 19 16 5042

11-06-2019

| Patent document cited in search report | | Publication date | Patent family member(s) | | Publication date |
|---|---|---|---|---|---|
| US 2003076432 | A1 | 24-04-2003 | NONE | | |
| US 5920274 | A | 06-07-1999 | NONE | | |
| US 2007102643 | A1 | 10-05-2007 | NONE | | |
| US 2014313387 | A1 | 23-10-2014 | US | 2014313387 A1 | 23-10-2014 |
| | | | WO | 2013070942 A1 | 16-05-2013 |
| US 2011007199 | A1 | 13-01-2011 | AT | 539554 T | 15-01-2012 |
| | | | EP | 2093996 A1 | 26-08-2009 |
| | | | EP | 2243287 A1 | 27-10-2010 |
| | | | ES | 2379752 T3 | 03-05-2012 |
| | | | JP | 5520840 B2 | 11-06-2014 |
| | | | JP | 2011512764 A | 21-04-2011 |
| | | | US | 2011007199 A1 | 13-01-2011 |
| | | | WO | 2009103751 A1 | 27-08-2009 |
| US 2003107666 | A1 | 12-06-2003 | AU | 2002366514 A1 | 23-06-2003 |
| | | | CN | 1602621 A | 30-03-2005 |
| | | | JP | 4261361 B2 | 30-04-2009 |
| | | | JP | 2005512464 A | 28-04-2005 |
| | | | US | 2003107666 A1 | 12-06-2003 |
| | | | WO | 03051036 A1 | 19-06-2003 |

EPO FORM P0459